# EUROPÄISCHE PATENTSCHRIFT

(11) **EP 3 713 654 B1**
(45) Veröffentlichungstag und Bekanntmachung des Hinweises auf die Patenterteilung: **23.09.2026**
(21) Anmeldenummer: 18811179.3
(22) Anmeldetag: 22.11.2018
(51) Int. Cl.: F02M 21/02, B01B 1/00, F02M 31/18, F02M 21/06

(54) **VERFAHREN ZUM BETRIEB EINES KATALYTISCHEN VERDAMPFERS UND ANWENDUNGEN DES VERFAHRENS**
METHOD FOR OPERATING A CATALYTIC EVAPORATOR, AND USES OF THE METHOD
PROCÉDÉ DE FONCTIONNEMENT D'UN ÉVAPORATEUR CATALYTIQUE ET APPLICATIONS DU PROCÉDÉ

(30) Priorität: 24.11.2017 DE 102017127847; 23.03.2018 DE 102018204456
(43) Veröffentlichungstag der Anmeldung: 30.09.2020
(73) Patentinhaber: Fraunhofer-Gesellschaft zur Förderung der angewandten Forschung e.V., 80686 München (DE)
(72) Erfinder: SZOLAK, Robert, 79111 Freiburg (DE); SUSDORF, Alexander, 79206 Breisach (DE); RÜMMELE, Florian, 79102 Freiburg (DE)
(74) Vertreter: Friese Goeden Patentanwälte PartGmbB
(86) Internationale Anmeldenummer: PCT/EP2018/082191
(87) Internationale Veröffentlichungsnummer: WO 2019/101846

(56) Entgegenhaltungen:
- EP-A1- 0 716 225
- WO-A2-2007/042246
- DE-A1- 102006 060 669
- DE-T2- 60 123 361
- JP-A- 2004 262 689
- US-A- 4 121 542
- US-A1- 2008 118 423
- US-A1- 2014 231 027
- US-B1- 6 202 407
- DATABASE WPI Section Ch Week 200465, Derwent World Patents Index; Class E36, AN 2004-665598, XP002788190

## Beschreibung

Die Erfindung betrifft ein Verfahren zum Betrieb eines katalytischen Verdampfers.

Es ist bekannt, katalytische Verdampfer zur Einstellung der Kraftstoffeigenschaften einer Brennkraftmaschine einzusetzen. Die WO 2007/042246 A2 beschreibt ein Verfahren zur Verdampfung und Reformierung flüssiger Brennstoffe, bei dem in einem ersten Reaktionsraum der Brennstoff unter Zuführung von Luft mit Hilfe eines ersten Katalysators verdampft und stark unterstöchiometrisch oxidiert und in einem zweiten Reaktionsraum der verdampfte Brennstoff mit zugeführter Luft vermischt und anschließend reformiert wird, wobei das Verhältnis des im ersten Reaktionsraum zugeführten Luftvolumens zu dem im zweiten Reaktionsraum zugeführten Luftvolumen zwischen 30:70 und 70:30 eingestellt wird.

Die DE 10 2010 012 945 B4 offenbart ein Verfahren zur Verdampfung von flüssigen Kraft- und/oder Brennstoffen, bei dem auf ein saugfähiges Material ein flüssiger Kraft- und/oder Brennstoff aufgetragen und durch Luftzufuhr ein sauerstoffhaltiges Gasgemisch oder Sauerstoff eingebracht wird, wobei das Sauerstoff/Brennstoffverhältnis unterstöchiometrisch ist.

Für die Durchführung dieses Verfahrens kann eine Vorrichtung eingesetzt werden, umfassend a) eine zentrale, axial und radial luftdurchlässige Luftzufuhr, b) ein Katalysatorsystem, das zumindest auf einem Teil der Länge der Luftzufuhr konzentrisch um diese angeordnet ist, c) eine konzentrisch um das Katalysatorsystem angeordnete Pufferzone und d) ein konzentrisch um die Pufferzone angeordnetes saugfähiges Material zur Brennstoffverteilung, wobei mindestens ein gasdichtes Dichtelement zwischen den Bestandteilen a) bis d) angebracht ist.

Aus der DE 10 2015 120 106 A1 ist ein Verfahren zur Einstellung der Zündeigenschaft eines Brennstoffs bekannt, das eine Einheit nutzt, welche mindestens eine Verteilungszone, mindestens eine Oxidationszone und mindestens eine Umwandlungszone aufweist. Dabei wird in der Verteilungszone, welche eine Verteilungsstruktur aufweist, Brennstoff verteilt, in der Oxidationszone zumindest ein Teil des Brennstoffs mit mindestens einem Oxidationsmittel an mindestens einem Katalysator auf einem Katalysatorträger oxidiert und in der Umwandlungszone zumindest ein Teil des verteilten Brennstoffs und/oder eines anderen zugeführten Brennstoffs thermisch und/oder katalytisch umgewandelt. Das Verfahren zeichnet sich dadurch aus, dass durch das Molverhältnis von im Oxidationsmittel enthaltenen Sauerstoff zum zur vollständigen Oxidation des vorhandenen Brennstoffes benötigten Sauerstoff, und/oder den Druck in der Einheit und/oder die Verweilzeit und/oder die Temperatur die Zündeigenschaft des Brennstoffs eingestellt wird.

Allgemein kann ein an sich bekannter katalytischer Verdampfer beispielsweise als Vorprozess für eine homogene Vermischung von Kraftstoff und Oxidationsmittel, beispielsweise Luft, eingesetzt werden. Gleichzeitig können die Kraftstoffeigenschaften so verändert werden, dass Stickoxide (NOₓ) und Rußemissionen innermotorisch reduziert werden. Besonders effektiv für die Verschiebung der Kraftstoffeigenschaften sind die Reaktionsprodukte von Reformierungsreaktionen (Wasserstoff (H₂) und Kohlenmonoxid (CO)). Die Light-off Temperaturen der Komponenten Wasserstoff und Kohlenmonoxid auf dem Dieseloxidationskatalysator sind wesentlich niedriger als die von Diesel, so dass bei einem Kaltstart eines Motors das Abgassystem schneller auf Betriebstemperatur kommt.

Desweitern kann der Verdampfer auch zum gleichzeitigen Erwärmen des Abgasnachbehandlungssystems verwendet werden. Eine Veränderung der Kraftstoffeigenschaften durch das katalytische Verdampfungsverfahren kann mit Hilfe der Erhöhung des Betriebsdrucks und der Erhöhung der Luftzahl erreicht werden. Die Erhöhung des Betriebsdrucks ist durch die Aufladung der Brennkraftmaschine begrenzt. Die Erhöhung der Luftzahl führt zu einer erhöhten Temperatur am Katalysator und kann dementsprechend nicht beliebig erhöht werden.

Ausgehend vom Stand der Technik liegt der Erfindung somit die Aufgabe zugrunde, ein Verfahren zum Betrieb von katalytischen Verdampfern anzugeben, welches die aus dem Stand der Technik bekannten Nachteile nicht aufweist, insbesondere mit dem die Kraftstoffeigenschaften in Bezug auf die Eigenschaften des Ursprungskraftstoffs in günstiger Weise verschoben werden können.

Die Aufgabe wird erfindungsgemäß durch ein Verfahren zum Betrieb eines katalytischen Verdampfers gemäß Anspruch 1 gelöst.

Vorteilhafte Weiterbildungen der Erfindung finden sich in den Unteransprüchen.

Erfindungsgemäß wird ein Verfahren zum Betrieb eines katalytischen Verdampfers, um die Light-off-Temperatur in einem Abgasnachbehandlungssystem einer Brennkraftmaschine zu reduzieren, vorgeschlagen umfassend: Zufuhr von Brennstoff und einem Oxidationsmittel zu dem katalytischen Verdampfer (1), wobei
(a) die Zufuhr des Brennstoffs als pulsierende Zugabe und
(b) die Zufuhr des Oxidationsmittels als pulsierende Zugabe erfolgt, wobei die pulsierenden Zugaben eine Folge von regelmäßig wiederkehrenden gleichartigen Zugaben darstellen.

Beim erfindungsgemäßen Verfahren werden der Brennstoff und das Oxidationsmittel beide zusammen in Form von Pulsen zugegeben, wobei Pulse zeitlich begrenzte Portionen sind. Sie können eine Folge von regelmäßig wiederkehrenden gleichartigen Zugaben darstellen. Dabei ist die pulsierende Zugabe von einer kontinuierlichen Zugabe verschieden, indem die pulsierende Zugabe zugabefreie Pausenzeiten enthält. Die Pulse für Brennstoffzugaben und die Pulse für die Oxidationsmittelzugaben können gleich lang oder unterschiedlich lang sein.

In einigen Ausführungsformen kann bei der pulsierenden Zugabe des Brennstoffes (a) während einer ersten Zeitspanne eine erste Menge des Brennstoffs und/oder während einer zweiten Zeitspanne eine zweite Menge des Brennstoffes und/oder während einer dritten Zeitspanne kein Brennstoff zugegeben werden.

In einigen Ausführungsformen können die Zugaben dadurch erfolgen, dass
(i) während der ersten Zeitspanne die erste Menge Brennstoff und während der dritten Zeitspanne kein Brennstoff zugegeben werden, wobei keine zweite Zeitspanne vorhanden sein muss oder
(ii) während der ersten Zeitspanne die erste Menge Brennstoff, während der zweiten Zeitspanne die zweite Menge Brennstoff und während der dritten Zeitspanne kein Brennstoff zugegeben werden
   oder
(iii) während der ersten Zeitspanne die erste Menge Brennstoff und während der zweiten Zeitspanne die zweite Menge Brennstoff zugegeben werden, wobei keine dritte Zeitspanne vorhanden sein muss.

Durch die Bezeichnungen "erste", zweite" und "dritte" wird nicht die Reihenfolge der Zugaben bezeichnet, sondern sie dienen lediglich zur Unterscheidung der Zugaben. Dabei weisen die Begriffe "erste Menge" und "zweite Menge" darauf hin, dass diese Mengen voneinander verschieden sind.

In einigen Ausführungsformen kann hinsichtlich der Brennstoffzufuhr die vorstehende erste Zeitspanne etwa 10 ms bis etwa 10 s betragen; die vorstehende zweite Zeitspanne kann etwa 10 ms bis etwa 10 s betragen, und die dritte Zeitspanne kann etwa 10 ms bis etwa 10 s betragen. In anderen Ausführungsformen der Erfindung kann die erste und/oder die zweite und/oder die dritte Zeitspanne zwischen etwa 1 Sekunden und etwa 5 Sekunden gewählt sein.

Die Pulse können nach den jeweiligen konkreten Erfordernissen für den Betrieb des katalytischen Verdampfers eingestellt werden, beispielsweise anhand der folgenden Parameter: Menge des Brennstoffs im Puls und/oder Dauer des Pulses und/oder Zeit zwischen zwei Pulsen (entspricht der Häufigkeit der Pulse pro Zeit). Der Fachmann kann durch einfache Experimente feststellen, wie die Pulse der Brennstoffzugabe einzustellen sind, um die jeweiligen konkreten Erfordernisse und die optimalen Ergebnisse für den Betrieb des Verdampfers zu erhalten.

Überraschenderweise wurde gefunden, dass durch die pulsierende Zugabe des Brennstoffs zum katalytischen Verdampfer die Luftzahl erhöht werden kann, ohne dass die maximale Temperatur des Katalysators überschritten wird. Auf diese Weise trägt die pulsierende Zugabe des Brennstoffs dazu bei, die Brennstoffeigenschaften im Vergleich zum ursprünglich eingesetzten Brennstoffs zu verschieben. Vor allem werden durch die pulsierende Zugabe des Brennstoffs die Brennstoffeigenschaften dahingehend verschoben, dass der Anteil an Wasserstoff und/oder Kohlenmonoxid deutlich erhöht wird. Gleichzeitig ermöglicht die pulsierende Betriebsweise ein schnelleres Umschalten von der maximalen zur minimalen Leistung.

Der katalytische Verdampfer, der in dem erfindungsgemäßen Verfahren eingesetzt werden kann, kann als Vorprozess für eine homogene Vermischung von Brennstoff und Oxidationsmittel, beispielsweise Luft, sorgen. Ein katalytischer Verdampfer, wie er im erfindungsgemäßen Verfahren eingesetzt werden kann, kann in an sich bekannter Weise zur Aufheizung bei der Abgasnachbehandlung verwendet werden. Mit dem erfindungsgemäßen Verfahren können die Brennstoffeigenschaften so verändert werden, dass Stickoxide (NOₓ) und Rußemissionen innermotorisch reduziert werden. Erfindungsgemäß wird eine besonders günstige und effektive Verschiebung der Brennstoffeigenschaften hin zu einer Erhöhung der Menge an Reaktionsprodukten von Reformierungsreaktionen (Wasserstoff (H₂) und Kohlenmonoxid (CO)) erreicht. Desweitern kann im erfindungsgemäßen Verfahren der Verdampfer vorteilhafterweise auch zum gleichzeitigen Erwärmen des Abgasnachbehandlungssystems verwendet werden. Ferner sind beim erfindungsgemäßen Verfahren die Light-off Temperaturen der Komponenten Wasserstoff und Kohlenmonoxid auf dem Dieseloxidationskatalysator wesentlich niedriger als die von Diesel, so dass bei einem Kaltstart eines Motors das Abgassystem schneller auf Betriebstemperatur kommt.

Das erfindungsgemäße Verfahren hat deutliche Kosten- und Leistungsvorteile bei Gasbrennern, die Heizöl verbrennen und bei selbstzündenden Brennkraftmaschinen bzw. Dieselmotoren, und zwar sowohl innermotorisch als auch in Abgasnachbehandlungssystemen. Darüber hinaus hat das erfindungsgemäße Verfahren hat deutliche Kosten- und Leistungsvorteile bei innermotorischer Anwendung in fremdgezündeten Brennkraftmaschinen.

Wie vorstehend beschrieben wurde, erfolgt die Brennstoffzugabe in Form einer pulsierenden Zugabe. Bei dem Betrieb eines katalytischen Verdampfers nach dem Stand der Technik werden sowohl der Brennstoff als auch das Oxidationsmittel kontinuierlich in vorher festgelegten Mengen zugegeben, d.h. die Zugabemenge von Oxidationsmittel und Brennstoff bleibt über die Zeit konstant. Als besonders günstig hat es sich beim erfindungsgemäßen Verfahren herausgestellt, dass eine voreingestellte Menge an Brennstoff über eine bestimmte Zeit zugegeben wird, gefolgt von einer Zeitspanne, in der kein Brennstoff zugegeben wird, d.h. eine Zeitspanne in der die Brennstoffzugabe auf den Wert "null" eingestellt wird. Die Menge des zuzugebenden Brennstoffs liegt in dem Bereich der bisher nach dem Stand der Technik eingesetzten Mengen an Brennstoff, die den aus dem Stand der Technik bekannten katalytischen Verdampfern zugesetzt werden.

In der Alternative (b) des erfindungsgemäßen Verfahrens kann bei der pulsierenden Zugabe des Oxidationsmittels während einer ersten Zeitspanne eine erste Menge des Oxidationsmittels und/oder während einer zweiten Zeitspanne eine zweite Menge des Oxidationsmittels und während einer dritten Zeitspanne kein Oxidationsmittel zugegeben werden.

In einigen Ausführungsformen können die Zugaben so erfolgen, dass
(i) während der ersten Zeitspanne die erste Menge Oxidationsmittel und während der dritten Zeitspanne kein Oxidationsmittel zugegeben werden, wobei keine zweite Zeitspanne vorhanden sein muss
   oder
(ii) während der ersten Zeitspanne die erste Menge Oxidationsmittel, während der zweiten Zeitspanne die zweite Menge Oxidationsmittel und während der dritten Zeitspanne kein Oxidationsmittel zugegeben werden
   oder
(iii) während der ersten Zeitspanne die erste Menge Oxidationsmittel und während der zweiten Zeitspanne die zweite Menge Oxidationsmittel zugegeben werden, wobei keine dritte Zeitspanne vorhanden sein muss.

Durch die Bezeichnungen "erste", zweite" und "dritte" wird nicht die Reihenfolge der Zugaben bezeichnet, sondern sie dienen lediglich zur Unterscheidung der Zugaben. Dabei weisen die Begriffe "erste Menge" und "zweite Menge" darauf hin, dass diese Mengen voneinander verschieden sind.

In einigen Ausführungsformen kann in der Alternative (b) bezüglich der Oxidationsmittelzugabe die vorstehende erste Zeitspanne etwa 10 ms bis etwa 10 s betragen; die vorstehende zweite Zeitspanne kann etwa 10 ms bis etwa 10 s betragen und die weitere Zeitspanne kann etwa 10 ms bis etwa 10 s betragen. In anderen Ausführungsformen kann in der Alternative (b) bezüglich der Oxidationsmittelzugabe die vorstehende erste Zeitspanne etwa 1 s bis etwa 5 s betragen; die vorstehende zweite Zeitspanne kann etwa 1 s bis etwa 5 s betragen und die weitere Zeitspanne kann etwa 1 s bis etwa 5 s betragen

Mit der pulsierenden Zugabe des Oxidationsmittels können die selben Vorteile erreicht werden, wie sie vorstehend in Verbindung mit der pulsierenden Zugabe des Brennstoffes beschrieben sind, so dass diesbezüglich auf vorstehende Ausführungen in vollem Umfang verwiesen wird.

Im erfindungsgemäßen Verfahren können katalytische Verdampfer eingesetzt werden, wie sie aus dem Stand der Technik an sich bekannt sind. Der Fachmann weiß auch, wie sie prinzipiell betrieben werden können.

Ein besonders günstiger katalytischer Verdampfer ist in der DE 10 2015 120 106 A1 beschrieben, auf die hinsichtlich der konstruktiven Details und der Betriebsweise in vollem Umfang verwiesen wird. Die Vorrichtung zur Einstellung der Zündeigenschaft mindestens eines Brennstoffs enthält
- mindestens einen Brennstoffeinlass und mindestens einen Oxidationsmitteleinlass,
- mindestens eine Verteilungszone zur Verteilung des Brennstoffs mit mindestens einer Verteilerstruktur für den Brennstoff,
- mindestens eine Oxidationszone zur zumindest teilweisen Oxidation des Brennstoffs enthaltend mindestens einen Katalysatorträger mit mindestens einem Katalysator,
- mindestens eine Umwandlungszone zur zumindest teilweisen katalytischen und/oder thermischen Umwandlung des Brennstoffs und
- mindestens einen Auslass für Brennstoff mit veränderter Zündeigenschaft,
wobei der Oxidationsmitteleinlass, der Katalysatorträger und die Verteilungszone so angeordnet und ausgestaltet sind, dass in der Oxidationszone entstandene Wärme an ein in die Verteilungszone und/oder Umwandlungszone strömendes Gas oder Gasgemisch übertragen werden kann.

In einigen Ausführungsformen kann der im erfindungsgemäßen Verfahren eingesetzte katalytische Verdampfer einen Katalysator aufweisen, der z.B. auf einen Träger aufgebracht sein kann. Der Träger mit dem Katalysator kann in ein Reaktionsgefäß so eingebracht sein, dass zwischen der inneren Oberfläche des Reaktionsgefäßes und der Katalysatoroberfläche ein Zwischenraum gebildet ist.

Die Funktionsweise des vorstehend beschriebenen katalytischen Verdampfers wird nachfolgend beispielhaft beschrieben. Eine gute Gemischbildung der Reaktionspartner ist günstig für den stabilen und effizienten Betrieb vieler chemischer Prozesse. Besonders bei Oxidationsprozessen, **z. B.** der Verbrennung, reduziert eine homogene Vermischung Emissionen und verhindert die Rußbildung. Dazu kann der flüssige Brennstoff in die Gasphase überführt werden. Die Vermischungsvorteile wurden für verschiedene Anwendungen (Brenner, Partikelfilter, Reformer) nachgewiesen. Besonders bedeutend ist die Kopplung mit einem Motor. Ziel ist es, den Verdampfer auf die innermotorische Nutzung anzupassen und die Reduzierung von Stickoxid- und Rußemissionen an einem Motorteststand zu verifizieren.

Beim Betrieb eines katalytischen Verdampfers kann beispielsweise der flüssige Brennstoff auf die Innenseite der Reaktorwand eines katalytischen Verdampfers zugegeben werden, während Luft katalysatorseitig zugeführt wird. Ein geringer Teil des Brennstoffs oxidiert am Katalysator und die dabei erzeugte Wärme wird zur vollständigen Verdampfung des Brennstoffs genutzt. Die Wärmeübertragung erfolgt überwiegend durch Wärmestrahlung von der heißen Katalysatoroberfläche auf die Oberfläche des Brennstofffilms. Die Reaktorwand, auf die der Brennstoff aufgegeben wird, ist dabei stets kälter als der Brennstoff selbst. So entstehen keinerlei Ablagerungen oder Verkrustungen.

Ein Brennstoff ist ein chemischer Stoff, dessen gespeicherte Energie sich durch Verbrennung in nutzbare Energie umwandeln lässt. Ein Beispiel dafür sind Kraftstoffe, die in Brennkraftmaschinen in Antriebskraft umgewandelt werden. In einigen Ausführungsformen kann der Brennstoff ausgewählt sein unter Benzin, Diesel, Bioöle, Pyrolyseöle, Biodiesel, Schweröl, Alkohole, Fischer-Tropsch-Kraftstoffe, Dimethylether, Diethylether, Oxymethylenether, Ester, Aldehyde, Aromaten, Amine, Carbonsäuren, Alkane, Erdgas, Campinggas, LPG, Fackelgase, Deponiegase, Biogase und Mischungen von mindestens zwei dieser Brennstoffe. Insbesondere können im erfindungsgemäßen Verfahren flüssige Brennstoffe eingesetzt werden. Mit diesen Kraftstoffen werden die vorstehend beschriebenen Vorteile in besonders günstiger Weise erzielt.

In einigen Ausführungsformen kann das Oxidationsmittel Sauerstoff oder sauerstoffhaltige Medien enthalten, insbesondere Luft oder Abgase mit Restsauerstoff. Damit werden die vorstehend beschriebenen Vorteile in besonders günstiger Weise erreicht.

Vorteilhafterweise werden, wie bereits vorstehend erläutert wurde, die Brennstoffeigenschaften in günstiger Weise verschoben. Somit eignet sich das erfindungsgemäße Verfahren bestens, um die Brennstoffeigenschaften so zu verschieben, dass Emissionen reduziert werden. Ferner kann das erfindungsgemäße Verfahren bei Verdampfern angewendet werden, um die Light-off-Temperatur in Abgasnachbehandlungssystemen von Brennkraftmaschinen zu reduzieren, insbesondere bei Pkw-Dieselmotoren. Ferner eignet sich das erfindungsgemäße Verfahren zur Erzeugung eines Reduktionsmittels für Speicherkatalysatoren. Dies kann entsprechend der US 7,386,977 B2 erfolgen. In dieser Patentveröffentlichung wird aus Methan CO und H₂ für die Regenerierung erzeugt. Mit der vorliegenden Erfindung kann aus Diesel CO und H₂ in analoger Weise wie in der US 7,386,977 B2 erzeugt werden.

Nachfolgend soll die Erfindung anhand von Figuren ohne Beschränkung des allgemeinen Erfindungsgedankens näher erläutert werden. Dabei zeigt
Fig. 1 eine Ansicht eines beispielhaft einsetzbaren katalytischen Verdampfers.
Fig. 2 zeigt das Prinzip der Wirkungsweise des katalytischen Verdampfers von Fig. 1.
Fig. 3a bis 3e zeigen einen Vergleich der kontinuierlichen Betriebsweise und verschiedener pulsierenden Betriebsweisen eines katalytischen Verdampfers, bei denen der Brennstoff pulsierend zugegeben wird.
Fig. 4a bis 4d zeigen verschiedene pulsierende Zugaben von Oxidationsmittel.
Fig. 5a-d zeigen die Brennstoffzusammensetzungen, wie sie nach den Betriebsweisen der Fig. 3a und 3b erhalten werden.

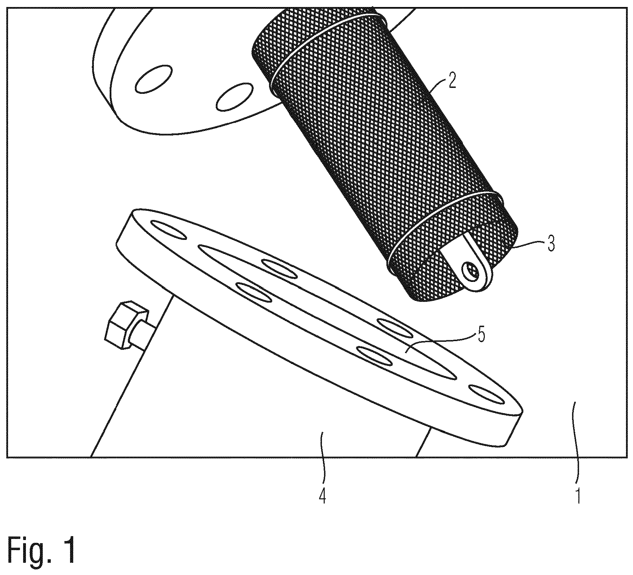

In Fig. 1 ist ein katalytischer Verdampfer 1 gezeigt, wie er im erfindungsgemäßen Verfahren eingesetzt werden kann. Der katalytische Verdampfer weist einen Katalysator 2 auf, der auf ein Metallnetz 3 aufgebracht ist. Als Katalysator 2 und als Metallnetz 3 können dabei solche Materialien eingesetzt werden, wie sie aus dem Stand der Technik bekannt sind. Das Metallnetz 3 mit dem Katalysator 2 kann in einem Reaktionsgefäß 4 vorliegen. In Fig. 1 erfolgt aus Gründen der Übersichtlichkeit die Darstellung so, dass der Katalysator 2 mit dem Metallnetz 3 aus dem Reaktionsgefäß 4 herausgezogen dargestellt ist. Wird der Katalysator 2 mit dem Metallnetz 3 in das Reaktionsgefäß eingeschoben, dann bildet sich zwischen der inneren Oberfläche 5 des Reaktionsgefäßes 4 und der Oberfläche des Katalysators 2 auf dem Metallnetz 3 ein Zwischenraum.

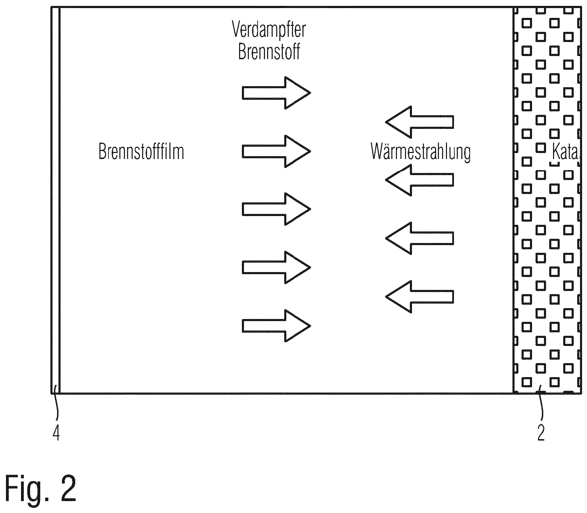

Fig. 2 zeigt schematisch die Wirkungsweise des in Fig. 1 dargestellten katalytischen Verdampfers. Eine gute Gemischbildung der Reaktionspartner ist günstig für den stabilen und effizienten Betrieb vieler chemischer Prozesse. Besonders bei Oxidationsprozessen, z. B. der Verbrennung, reduziert eine homogene Vermischung Emissionen und verhindert die Rußbildung. Bei Betrieb des katalytischen Verdampfers werden flüssige Brennstoffe in die Gasphase überführt. Die Vermischungsvorteile wurden für verschiedene Anwendungen (Brenner, Partikelfilter, Reformer) nachgewiesen. Besonders bedeutsam ist die Kopplung mit einem Motor. Der Verdampfer kann auf die innermotorische Nutzung angepasst werden und die Reduzierung von Stickoxid- und Rußemissionen wurden an einem Motorteststand nachgewiesen.

Der flüssige Brennstoff wird auf die innere Oberfläche des Reaktorgefäßes 4 zugegeben, während Luft katalysatorseitig zugeführt wird. Ein geringer Teil des Brennstoffs oxidiert am Katalysator 2 und die dabei erzeugte Wärme wird zur vollständigen Verdampfung des Brennstoffs genutzt. Die Wärmeübertragung erfolgt überwiegend durch Wärmestrahlung von der heißen Oberfläche des Katalysators 2 auf die Oberfläche des Brennstofffilms. Die Wand des Reaktorgefäßes **4,** auf die der Brennstoff aufgegeben wird, kann dabei kälter als der Brennstoff selbst sein. So entstehen keinerlei Ablagerungen oder Verkrustungen.

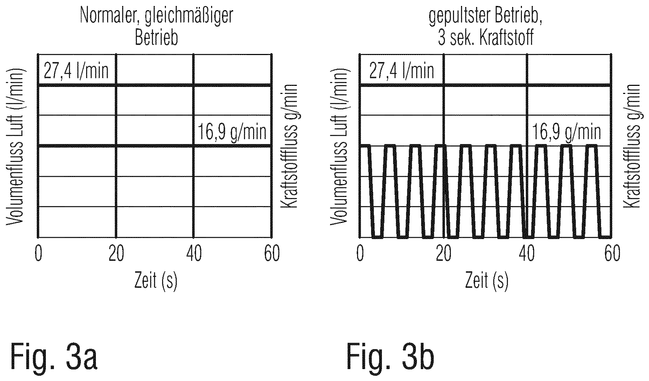

In den Fig. 3a und 3b sind die Verläufe der Mengen an zugegebenen Oxidationsmittel (hier: Luft) und die Mengen an Brennstoff angegeben. Bei der in Fig. 3a dargestellten normalen **(d.h.** kontinuierlichen) Betriebsweise werden das Oxidationsmittel und der Brennstoff über die Betriebsdauer in konstanten Mengen kontinuierlich zugegeben. Im Gegensatz dazu (vgl. Fig. 3b) erfolgt bei dem erfindungsgemäßen Verfahren die Zugabe des Brennstoffs als pulsierende Zugabe. Die Zugabe des Oxidationsmittels erfolgt dagegen nicht als pulsierende Zugabe, sondern vielmehr so wie aus dem Stand der Technik bekannt in Form einer kontinuierlichen Zugabe. Bei der pulsierenden Zugabe des Brennstoffs werden Zeitspannen mit einer Zugabe von Brennstoff (im Beispiel 16,9 g/min) gefolgt von Zeitspannen ohne Brennstoffzufuhr (0 g/min). In dem der Fig. 3b zugrundeliegenden Beispiel wurden die Zeitspannen mit und ohne Brennstoffzufuhr auf jeweils 3 s eingestellt.

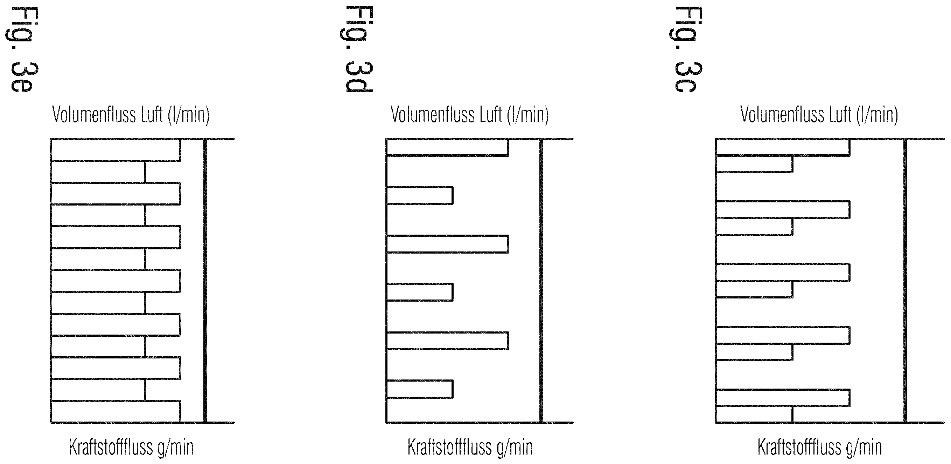

In den Fig. 3c bis 3e sind weitere Ausführungsformen der pulsierenden Zugabe von Brennstoff dargestellt. In Fig. 3b ist wird in einer ersten Zeitspanne eine erste Menge Brennstoff zugegeben, unmittelbar gefolgt von einer zweiten Zeitspanne, bei der eine geringere zweite Menge Brennstoff zugegeben wird. Dem schließt sich eine weitere Zeitspanne an, in der kein Brennstoff in den katalytischen Verdampfer eingeleitet wird.

In Fig. 3d sind die in Fig. 3c dargestellten pulsierenden Zugaben von zwei unterschiedlichen Mengen Brennstoff und einer Zeitspanne ohne Brennstoffzugabe gezeigt, wobei zwischen jeder Brennstoffzugabe eine Zeitspanne zwischengeschaltet ist, in der kein Brennstoff zugeführt wird.

In Fig. 3e ist die pulsierende Zugabe von zwei unterschiedlichen Brennstoffmengen gezeigt, wobei keine Zeitspanne ohne Brennstoffzugabe durchgeführt wird.

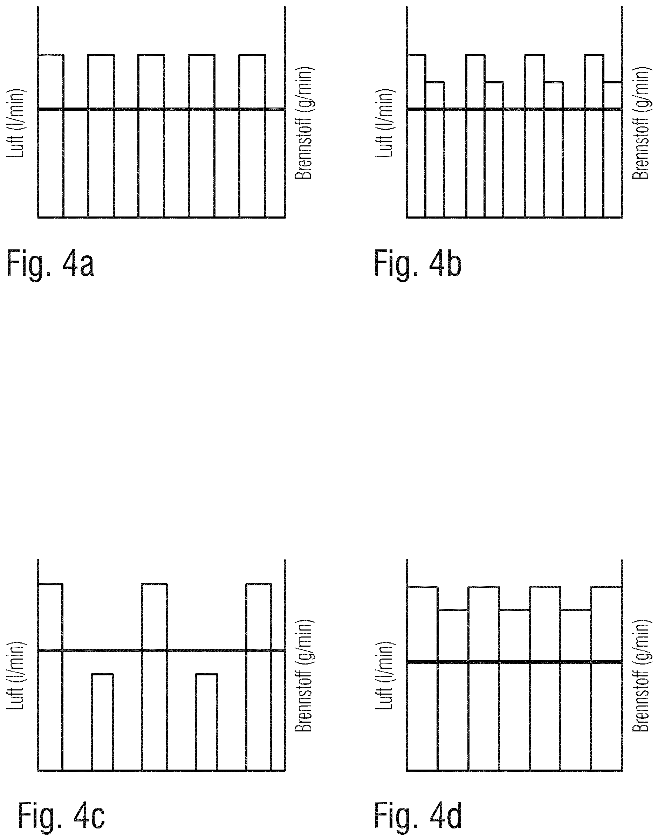

In den Fig. 4a bis 4d sind die entsprechenden pulsierenden Zugaben von Oxidationsmittel bei kontinuierlicher Zugabe von Brennstoff gezeigt, die den Fig. 3b bis 3e entsprechen, so dass im vollem Umfang auf vorstehende Ausführungen verwiesen wird, die im Ergebnis für die Fig. 4a bis 4d ebenfalls zutreffen.

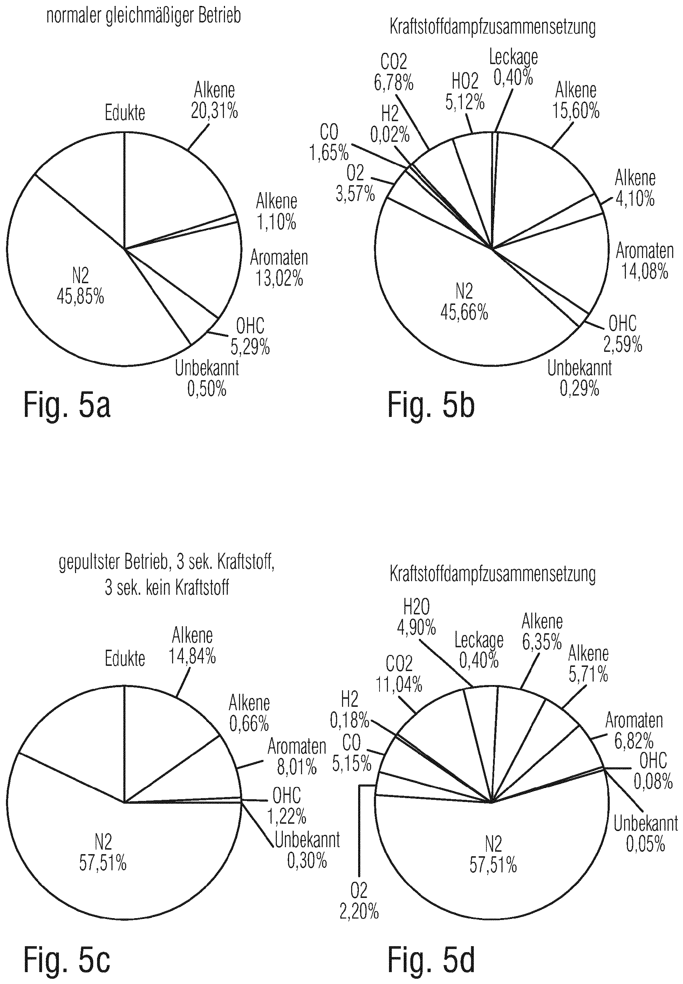

In Figuren 5a bis 5d wurden die Änderungen der Brennstoffzusammensetzung bei dem in Fig. 3a dargestellten normalen Betrieb (Fig. 5a und 5b) und dem in Fig. 3b gezeigten erfindungsgemäßen pulsierenden Betrieb (Fig. 5c und 5d) verglichen. Da im erfindungsgemäßen Verfahren der Brennstoff nicht kontinuierlich zugeführt wird, kann eine Luftzahl höher als 0,2 gefahren werden ohne den Katalysator zu überhitzen. Durch diese hohen Luftzahlen erhöht sich der Anteil an Kohlenmonoxid (CO) und Wasserstoff (H₂) deutlich. So konnte der Anteil an CO um das Dreifache und der Anteil an H₂ sogar um das Neunfache erhöht werden. Die Anpassung der Betriebsweise eines katalytischen Verdampfers ermöglicht dessen Einsatz in dynamischen Anwendungen, beispielsweise einem Pkw-Motor.

Selbstverständlich ist die Erfindung nicht auf die in den Figuren dargestellten Ausführungsformen beschränkt. Die vorstehende Beschreibung ist daher nicht als beschränkend sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Beschreibung oder die Ansprüche ,erste' und ,zweite' Merkmale definieren, so dient dies der Unterscheidung gleichartiger Merkmale ohne eine Rangfolge festzulegen.

## Patentansprüche

1. Verfahren zum Betrieb eines katalytischen Verdampfers (1), um die Light-off-Temperatur in einem Abgasnachbehandlungssystem einer Brennkraftmaschine zu reduzieren, umfassend die Zufuhr von Brennstoff und einem Oxidationsmittel zu dem katalytischen Verdampfer (1),
**dadurch gekennzeichnet, dass**
(a) die Zufuhr des Brennstoffs als pulsierende Zugabe erfolgt
und
(b) die Zufuhr des Oxidationsmittels als pulsierende Zugabe erfolgt, wobei
die pulsierenden Zugaben eine Folge von regelmäßig wiederkehrenden gleichartigen Zugaben darstellen.

2. Verfahren nach Anspruch 1, **dadurch gekennzeichnet, dass** bei der pulsierenden Zugabe des Brennstoffes (a) während einer ersten Zeitspanne eine erste Menge des Brennstoffs und/oder während einer zweiten Zeitspanne eine zweite Menge des Brennstoffs und/oder während einer dritten Zeitspanne kein Brennstoff zugegeben werden.

3. Verfahren nach Anspruch 2, **dadurch gekennzeichnet, dass**
(i) während der ersten Zeitspanne die erste Menge Brennstoff und während der dritten Zeitspanne kein Brennstoff zugegeben werden
oder
(ii) während der ersten Zeitspanne die erste Menge Brennstoff, während der zweiten Zeitspanne die zweite Menge Brennstoff und während der dritten Zeitspanne kein Brennstoff zugegeben werden
oder
(iii) während der ersten Zeitspanne die erste Menge Brennstoff und während der zweiten Zeitspanne die zweite Menge Brennstoff zugegeben werden.

4. Verfahren nach Anspruch 2 oder 3, **dadurch gekennzeichnet, dass** die erste Zeitspanne 10 ms bis 10 s beträgt oder dass die zweite Zeitspanne 10 ms bis 10 s beträgt oder dass die dritte Zeitspanne 10 ms bis 10 s beträgt.

5. Verfahren nach einem der Ansprüche 1 bis 4, **dadurch gekennzeichnet, dass** bei der pulsierenden Zugabe des Oxidationsmittels (b) während einer ersten Zeitspanne eine erste Menge des Oxidationsmittels und/oder während einer zweiten Zeitspanne eine zweite Menge des Oxidatiosmittels und/oder während einer dritten Zeitspanne kein Oxidationsmittel zugegeben werden.

6. Verfahren nach Anspruch 5, **dadurch gekennzeichnet, dass**
(i) während der ersten Zeitspanne die erste Menge Oxidationsmittel und während der dritten Zeitspanne kein Oxidationsmittel zugegeben werden
oder
(ii) während der ersten Zeitspanne die erste Menge Oxidationsmittel, während der zweiten Zeitspanne die zweite Menge Oxidationsmittel und während der dritten Zeitspanne kein Oxidationsmittel zugegeben werden
oder
(iii) während der ersten Zeitspanne die erste Menge Oxidationsmittel und während der zweiten Zeitspanne die zweite Menge Oxidationsmittel zugegeben werden.

7. Verfahren nach Anspruch 5 oder 6, **dadurch gekennzeichnet, dass** die erste Zeitspanne 10 ms bis 10 s beträgt und/oder dass die zweite Zeitspanne 10 ms bis 10 s beträgt und/oder dass die dritte Zeitspanne 10 ms bis 10 s beträgt oder dass die erste Zeitspanne 1 s bis 5 s beträgt und/oder dass die zweite Zeitspanne 1 s bis 5 s beträgt und/oder dass die dritte Zeitspanne 1 s bis 5 s beträgt.

8. Verfahren nach einem der Ansprüche 1 bis 7, dadurch gekennzechnet, dass der Brennstoff ausgewählt ist unter Benzin, Diesel, Bioöle, Pyrolyseöle, Biodiesel, Schweröl, Alkohole, Fischer-Tropsch-Kraftstoffe, Dimethylether, Diethylether, Oxymethylenether, Ester, Aldehyde, Aromaten, Amine, Carbonsäuren, Alkane, Erdgas, Campinggas, LPG, Fackelgase, Deponiegase, Biogase und Mischungen von mindestens zwei dieser Brennstoffe.

9. Verfahren nach einem der Ansprüche 1 bis 8, **dadurch gekennzeichnet, dass** das Oxidationsmittel Sauerstoff oder sauerstoffhaltige Medien enthält, insbesondere Luft oder Abgase mit Restsauerstoff.

## Claims

1. Method for operating a catalytic evaporator (1) in order to reduce the light-off temperature in an exhaust gas aftertreatment system of an internal combustion engine, comprising the supply of fuel and an oxidant to the catalytic evaporator (1),
**characterized in that**
(a) the fuel is supplied as a pulsed feed
and
(b) the oxidant is supplied as a pulsed feed,
the pulsed feeds constituting a sequence of regularly recurring feeds of the same type.

2. Method according to claim 1, **characterized in that**, when the fuel (a) is added in pulsed fashion, a first amount of the fuel is added during a first period of time and/or a second amount of fuel is added during a second period of time and/or no fuel is added during a third period of time.

3. Method according to claim 2, **characterized in that**
(i) the first amount of fuel is added during the first period of time and no fuel is added during the third period of time
or
(ii) the first amount of fuel is added during the first period of time, the second amount of fuel is added during the second period of time and no fuel is added during the third period of time
or
(iii) the first amount of fuel is added during the first period of time and the second amount of fuel is added during the second period of time.

4. Method according to claim 2 or 3, **characterized in that** the first period of time is 10 ms to 10 s or **in that** the second period of time is 10 ms to 10 s or **in that** the third period of time is 10 ms to 10 s.

5. Method according to any one of claims 1 to 4, **characterized in that**, when the oxidant (b) is added in pulsed fashion, a first amount of the oxidant is added during a first period of time and/or a second amount of the oxidant is added during a second period of time and/or no oxidant is added during a third period of time.

6. Method according to claim 5, **characterized in that**
(i) the first amount of oxidant is added during the first period of time and no oxidant is added during the third period of time
or
(ii) the first amount of oxidant is added during the first period of time, the second amount of oxidant is added during the second period of time and no oxidant is added during the third period of time
or
(iii) the first amount of oxidant is added during the first period of time and the second amount of oxidant is added during the second period of time.

7. Method according to claim 5 or 6, **characterized in that** the first period of time is 10 ms to 10 s and/or **in that** the second period of time is 10 ms to 10 s and/ or **in that** the third period of time is 10 ms to 10 s, or **in that** the first period of time is 1 s to 5 s and/or **in that** the second period of time is 1 s to 5 s and/or **in that** the third period of time is 1 s to 5 s.

8. Method according to any one of claims 1 to 7, **characterized in that** the fuel is selected from gasoline, diesel, bio-oils, pyrolysis oils, biodiesel, heavy oil, alcohols, Fischer-Tropsch fuels, dimethyl ether, diethyl ether, oxymethylene ether, esters, aldehydes, aromatics, amines, carboxylic acids, alkanes, natural gas, camping gas, LPG, flare gases, landfill gases, biogases, and mixtures of at least two of these fuels.

9. Method according to any one of claims 1 to 8, **characterized in that** the oxidant comprises oxygen or oxygen-containing media, in particular air or exhaust gases containing residual oxygen.

## Revendications

1. Procédé de fonctionnement d'un évaporateur catalytique (1) destiné à réduire la température de démarrage dans un système de post-traitement des gaz d'échappement d'un moteur à combustion interne, comprenant l'alimentation de l'évaporateur catalytique (1) en carburant et en agent oxydant,
**caractérisé en ce que**
(a) l'alimentation en carburant s'effectue sous forme d'injections pulsées et
(b) l'alimentation en agent oxydant s'effectue sous forme d'injections pulsées,
les injections pulsées constituant une succession d'injections de même nature qui se répètent régulièrement.

2. Procédé selon la revendication 1,
**caractérisé en ce que**, lors de l'injection pulsée du carburant, (a) une première quantité de carburant est injectée pendant un premier intervalle de temps et/ou une deuxième quantité de carburant est injectée pendant un deuxième intervalle de temps et/ou aucun carburant n'est injecté pendant un troisième intervalle de temps.

3. Procédé selon la revendication 2,
**caractérisé en ce que**
(i) pendant le premier intervalle de temps, la première quantité de carburant est injectée et, pendant le troisième intervalle de temps, aucun carburant n'est injecté,
ou
(ii) pendant le premier intervalle de temps, la première quantité de carburant est injectée, pendant le deuxième intervalle de temps, la deuxième quantité de carburant est injectée et, pendant le troisième intervalle de temps, aucun carburant n'est injecté,
ou
(iii) pendant le premier intervalle de temps, la première quantité de carburant est injectée, et pendant le deuxième intervalle de temps, la deuxième quantité de carburant est injectée.

4. Procédé selon la revendication 2 ou 3,
**caractérisé en ce que** le premier intervalle de temps est de 10 ms à 10 s, ou **en ce que** le deuxième intervalle de temps est de 10 ms à 10 s, ou **en ce que** le troisième intervalle de temps est de 10 ms à 10 s.

5. Procédé selon l'une des revendications 1 à 4,
**caractérisé en ce que**, lors de l'injection pulsée de l'agent oxydant (b), une première quantité d'agent oxydant est injectée pendant un premier intervalle de temps, et/ou une deuxième quantité d'agent oxydant est injectée pendant un deuxième intervalle de temps, et/ou aucun agent oxydant n'est injecté pendant un troisième intervalle de temps.

6. Procédé selon la revendication 5,
**caractérisé en ce que**
(i) pendant le premier intervalle de temps, la première quantité d'agent oxydant est injectée et, pendant le troisième intervalle de temps, aucun agent oxydant n'est injecté,
ou
(ii) pendant le premier intervalle de temps, la première quantité d'agent oxydant est injectée, pendant le deuxième intervalle de temps, la deuxième quantité d'agent oxydant est injectée et, pendant le troisième intervalle de temps, aucun agent oxydant n'est injecté,
ou
(iii) la première quantité d'agent oxydant est injectée pendant le premier intervalle de temps et la deuxième quantité d'agent oxydant est injectée pendant le deuxième intervalle de temps.

7. Procédé selon la revendication 5 ou 6,
**caractérisé en ce que** le premier intervalle de temps est de 10 ms à 10 s et/ou **en ce que** le deuxième intervalle de temps est de 10 ms à 10 s et/ou **en ce que** le troisième intervalle de temps est de 10 ms à 10 s, ou **en ce que** le premier intervalle de temps est de 1 s à 5 s et/ou **en ce que** le deuxième intervalle de temps est de 1 s à 5 s et/ou **en ce que** le troisième intervalle de temps est de 1 s à 5 s.

8. Procédé selon l'une des revendications 1 à 7,
**caractérisé en ce que** le carburant est choisi parmi l'essence, le diesel, les bio-huiles, les huiles de pyrolyse, le biodiesel, le fioul lourd, les alcools, les carburants Fischer-Tropsch, le diméthyléther, le diéthyléther, l'oxyméthylène-éther, les esters, les aldéhydes, les composés aromatiques, les amines, les acides carboxyliques, les alcanes, le gaz naturel, le gaz de camping, le GPL, les gaz de torchère, les gaz de décharge, les biogaz et les mélanges d'au moins deux de ces carburants.

9. Procédé selon l'une des revendications 1 à 8,
**caractérisé en ce que** l'agent oxydant contient de l'oxygène ou des milieux contenant de l'oxygène, en particulier de l'air ou des gaz d'échappement contenant de l'oxygène résiduel.
